# EUROPÄISCHE PATENTANMELDUNG

(11) **EP 4 148 641 A1**
(43) Veröffentlichungstag der Anmeldung: **15.03.2023**
(21) Anmeldenummer: 22189841.4
(22) Anmeldetag: 11.08.2022
(51) Int. Cl.: G06Q 10/30

(54) **VERFAHREN UND SYSTEM ZUM IDENTIFIZIEREN EINES VERPACKUNGSMATERIALS FÜR DAS RECYCLING**

(30) Priorität: 14.09.2021 DE 102021123789; 14.12.2021 DE 102021133107
(71) Anmelder: PACCOR Packaging GmbH, 40468 Düsseldorf (DE)
(72) Erfinder: Ruland, Helmut, 50189 Elsdorf (DE); Schütte, Andreas, 40667 Meerbusch (DE)
(74) Vertreter: Hannke, Christian

(57) **Zusammenfassung**

Verfahren zum Identifizieren eines Verpackungsmaterials für das Recycling, umfassend die Schritte:
a. Bereitstellen eines Behältnisses zur Verpackung eines Produktes mit einem behältnisinhärenten Code;
b. Anlegen eines dem behältnisinhärentem Code zugeordneten Eintrags in einer Datenbank, wobei der Eintrag zumindest Daten über bei der Produktion des Behältnisses verwendeten Verpackungsmaterialien enthält;
c. Bereitstellen zumindest einer Ausleseeinrichtung zum Auslesen des behältnisinhärenten Codes;
d. Auslesen des behältnisinhärenten Codes;
e. Abfragen der Daten des Eintrags aus der Datenbank für das Recycling des Behältnisses.

## Beschreibung

Die Erfindung betrifft ein Verfahren zum Identifizieren eines Verpackungsmaterials für das Recycling und ein System zur Verfolgung eines Behältnisses während eines Lebenszyklus des Behältnisses.

Aus dem Stand der Technik sind diverse verschiedene Verpackungslösungen bekannt. Von besonderer Bedeutung sind Verpackungen für Lebensmittel, da an die dafür verwendeten Verpackungsmaterialien besondere Anforderungen gestellt werden. Um die Anforderungen hinsichtlich der Hygiene, der Bedruckbarkeit und der Barriereeigenschaften für Kontaminierungen zu erfüllen, werden Lebensmittel überwiegend in Verpackungen aus Kunststoffen eingepackt.

Im Hinblick auf die mit der Verwendung von Kunststoffen zur Verpackung einher gehende Problematik der ungenügenden Recycelbarkeit, der Schadstoffbelastung bei der thermischen Verwertung und der schlechten Abbaubarkeit bestehen Bestrebungen Kunststoffe durch alternative Werkstoffe zu ersetzen. Dieses Bestreben ist insbesondere durch die aktuelle Diskussion von Kunststoffresten in den Weltmeeren und Mikroplastik in der Umwelt weiter gesteigert.

Um den Anteil der recyclingfähigen Kunststoffe zu erhöhen und insbesondere die Widerverwertbarkeit der beim Recycling gewonnenen Kunststoffe zu erhöhen, ist es notwendig, die Kunststoffe sortenrein voneinander zu trennen. Dies ist nicht nur im Hinblick auf die Verringerung des thermisch zu entsorgenden Abfallanteils vorteilhaft, sondern auch wirtschaftlich sinnvoll, da sortenreine Kunststoffe einen wertvollen Rohstoff darstellen.

Schon heute weisen Verpackungen aus Kunststoff oft einen Aufdruck oder eine Prägung auf, die einen Hinweis auf das Verpackungsmaterial gibt. Ebenso gibt es seit Längerem Bestrebungen, Verpackungen möglichst aus ausschließlich einem einzigen Material herzustellen, so dass die gesamte Verpackung gemeinsam entsorgt werden kann. Die Ausbildung von Verpackungen aus ausschließlich einem einzigen Material verringert die Wahrscheinlichkeit, dass mehrere verschiedene Materialien einer einzigen Verpackung während des Recyclings untrennbar miteinander verbunden bleiben und gemeinsam Aufbereitete werden. Die gemeinsame Aufbereitung von Verpackungen aus mehreren Kunststoffen hätte zur Folge, dass einer der Kunststoffe als Verunreinigung des anderen Kunststoffs im Recyclat vorliegen würde.

Beispielsweise aus den Patentanmeldungen US 2019/ 0 306 385 A1 und DE 10 2020 125 214 A1 ist ein Verfahren zum Codieren von verschiedenen Verpackungen bekannt. Dabei wird ein Code hoch repetitiv auf Oberflächen der Verpackung angebracht oder in oberflächennähe in die Verpackung eingebracht. Durch die hohe Redundanz dieses Codes und dessen Anordnung an einer Vielzahl von Oberflächen abschnitten, die gegebenenfalls unterschiedlich ausgerichtet sind, ist das Auslesen dieses Codes unabhängig von der Ausrichtung der Verpackung möglich.

Aufgrund der Vielzahl der für Verpackungen genutzten Kunststoffe ist es insbesondere im privaten Bereich nicht möglich oder zumindest nicht vorgesehen, die anfallenden Kunststoffe sortenrein zu trennen. Selbst wenn also auf einer Kunststoffverpackung der enthaltene Kunststoff angegeben ist, wird er dennoch gemeinsam mit weiteren Kunststoffverpackungen entsorgt, die eventuell andere Kunststoffe enthalten können. Beispielsweise in Deutschland sind Kunststoffverpackungen oft mit dem sogenannten "grünen Punkt" versehen und werden im privaten Bereich unabhängig vom enthaltenen Kunststoff im sogenannten "gelben Sack" oder der "gelben Tonne" entsorgt.

Zum Recycling können zwar einige der in einem solchen Gemisch verschiedener Kunststoffe enthaltenen Kunststoffe identifiziert und anschließend separiert werden. Die dazu notwendigen Verfahren nutzen beispielsweise spektroskopische Methoden zur Identifizierung bestimmter Kunststoffe in Verpackungen. Diese Verfahren sind jedoch sehr aufwendig, langsam, erfordern teure Geräte und oftmals nicht in der Lage mehrkomponentige Verpackungen sortenrein zu trennen.

Der Erfindung liegt demzufolge die Aufgabe zugrunde, ein Verfahren zum Identifizieren eines Verpackungsmaterials für das Recycling sowie ein System, mit welchem die Materialien einer dem Recycling zugeführten Verpackung einfach identifizierbar sind, bereitzustellen.

Diese Aufgabe wird gelöst durch ein Verfahren mit den Merkmalen des Patentanspruches 1, sowie durch ein System nach Anspruch 8. Vorteilhafte Ausgestaltungen der Erfindung finden sich in den abhängigen Patentansprüchen.

Kerngedanke der Erfindung ist ein Verfahren zum Identifizieren eines Verpackungsmaterials für das Recycling, umfassend die Schritte:
a. Bereitstellen eines Behältnisses zur Verpackung eines Produktes mit einem behältnisinhärenten Code;
b. Anlegen eines dem behältnisinhärenten Code zugeordneten Eintrags in einer Datenbank, wobei der Eintrag zumindest Daten über bei der Produktion des Behältnisses verwendeten Verpackungsmaterialien enthält;
c. Bereitstellen zumindest einer Ausleseeinrichtung zum Auslesen des behältnisinhärenten Codes;
d. Auslesen des behältnisinhärenten Codes;
e. Abfragen der Daten des Eintrags aus der Datenbank für das Recycling des Behältnisses.

Im Rahmen dieser Erfindung werden die Begriffe ʺVerpackung" und ʺBehältnis" synonym verwendet.

Der Schritt des Bereitstellens des Behältnisses mit dem behältnisinhärenten Code erfolgt bevorzugt derart, dass das Behältnis bereitgestellt wird und dieses Behältnis bereits mit einem Code versehen ist. Der Code ist vorzugsweise unlösbar mit dem Behältnis verbunden. Beispielsweise könnte der Code durch eine Oberflächenbehandlung des Behältnisses mit dem Behältnis verbunden worden sein. Eine solche Oberflächenbehandlung könnte beispielsweise ein Druck, eine Gravur oder bei zumindest einigen Kunststoffen ebenfalls denkbar und in einigen Ausführungsformen bevorzugt eine lokale Änderung der Material- und/oder Oberflächeneigenschaft beispielsweise durch thermische Behandlung und/oder Laserbeaufschlagung. Ein Vorteil der unlösbaren Verbindung von Code und Behältnis besteht darin, dass eine einmal erfolgte Zuordnung zwischen einem Code und einem Behältnis dauerhaft bestehen bleibt. Bei der Herstellung des Behältnisses sind dem Hersteller des Behältnisses die dazu verwendeten Materialien bekannt. Wird durch den Code eine Verknüpfung zwischen diesem Behältnis und den zu dessen Herstellung verwendeten Materialien hergestellt, kann diese über den gesamten Lebenszyklus des Behältnisses nachverfolgt werden und dementsprechend das Recycling ausgewählt und durchgeführt werden. Eine fehlerhafte Neuverknüpfung zwischen einem Code und einem Behältnis, wie es beispielsweise beim Aufkleben eines den Code enthaltenden Etiketts oder dem Überstülpen einer den Code enthaltenden Banderole auftreten könnte, kann so effektiv vermieden werden.

Gemäß einer bevorzugten Ausführungsform wird eine Vielzahl an Behältnissen bereitgestellt.

Bevorzugt ist der behältnisinhärente Code lediglich einem bestimmten Behältnis, einer bestimmten Charge von Behältnissen oder einer bestimmten Art von Behältnissen zugeordnet. Insbesondere ist bevorzugt, dass der behältnisinhärente Code für jedes einzelne Behältnis separat vergeben ist und vorzugsweise einmalig ist. Dies ermöglicht es, jedes einzelne Behältnis genau zu identifizieren.

Vorzugsweise wird vom Hersteller des Behältnisses unmittelbar bei der Herstellung der Code nicht nur unlösbar mit dem Behältnis verbunden, sondern auch ein Eintrag in einer Datenbank angelegt. Dieser Eintrag enthält zumindest auch Daten über bei der Produktion des Behältnisses verwendete Materialien.

Gemäß einer bevorzugten Ausführungsform ist ein behältnisinhärenter Code während eines Lebenszyklus des Behältnisses einmalig. Bevorzugt ist nach Ende des Lebenszyklus der einmalige Code an ein weiteres Behältnis zu Beginn eines Lebenszyklus des weiteren Behältnisses vergebbar.

Vorzugsweise ist jeder Code ein Einmalcode. Alternativ oder ergänzend dazu ist es jedoch auch denkbar, dass ein Code, nachdem das diesem zugeordnete Behältnis dem Recycling zugeführt wurde, erneut vergeben wird. Ein solcher Einmalcode existiert in diesem Fall während des Produktzyklus einer Verpackung nur einziges Mal, kann jedoch nach der Vernichtung des diesem Code zugeordnetem Behältnis erneut vergeben werden.

Gemäß einer bevorzugten Ausführungsform ist der Eintrag in der Datenbank für das mit dem Code versehene Behältnis während des Lebenszyklus des Behältnisses an jedem Ort und von einer Person oder Vorrichtung, die das Behältnis behandelt, abfragbar.

Der Schritt des Bereitstellens einer Ausleseeinrichtung zum Auslesen des behältnisinhärenten Code wird vorzugsweise nicht ausschließlich für das Recycling durchgeführt, sondern kann wie oben beschrieben an jedem Ort und von jedem vorgesehen sein, der das Behältnis behandelt. Insbesondere ist jedoch bevorzugt, dass am Ende des Produktzyklus mittels einer Ausleseeinrichtung der behältnisinhärente Code ausgelesen wird.

Gemäß einer bevorzugten Ausführungsform enthält der Eintrag weitere Daten, wobei die weiteren Daten ausgewählt sind aus einer Gruppe, die für ein Volumen des Behältnisses, eine Form des Behältnisses, eine Kompatibilität des Behältnisses zu einem Behältnisverschluss, eine Kompatibilität zu Hilfsstoffen, eine Eignung des Behältnisses zum Verpacken bestimmter Güter, eine Eignung des Behältnisses bei bestimmten Umgebungsbedingungen, ein Zeitintervall, innerhalb dessen das Behältnis zur Ver-packung eines Produkts verwendet werden kann, ein Zeitintervall, über welches die Sterilität des Behältnisses gewährleitet werden kann, charakteristisch sind.

Dadurch ist es möglich, dass auch bei der späteren Verwendung dieser Verpackung beispielsweise zum Verpacken von Gütern, eine sichere Handhabung gewährleistet werden kann. Beispielsweise könnte ein Dienstleister, der ein Produkt verpackt, den Code mittels eines geeigneten Lesegeräts auslesen und die mit diesem Code verknüpften Informationen erhalten.

Gemäß einer bevorzugten Ausführungsform umfasst das Verfahren den Schritt einer Ergänzung und/oder Änderung des Eintrags in der Datenbank bei jeweils einem Behandlungsschritt des Behältnisses durch mindestens eine weitere Information, wobei diese Information ausgewählt ist aus einer Gruppe, die ein im Behältnis enthaltenes Produkt, ein Produktionsdatum des Produkts, ein Produktionsdatum des Behältnisses, ein Verpackungsdatum, ein Verfallsdatum des Produkts, einen Hinweis auf einen verantwortlichen Mitarbeiter, einen Ort der Produktion des Behältnisses und/oder des Produkts, einen Verpackungsort, eine Produktionszeit, eine Verpackungszeit, einen Vertriebsweg, einen Abschnitt eines Vertriebswegs, einen Transporteur, einen Zwischenhändler, einen Großhändler, einen Einzelhändler, einen Verkauf an einen Endverbraucher, einen Gefahrenhinweis, eine Sicherheitsanweisung, eine Lageranweisung, eine Lagertemperatur umfasst.

Vorzugsweise ist auch Unternehmen und/oder Privatpersonen eine Ergänzung und/oder Änderung des mit einem Code verbundenen Eintrags in der Datenbank möglich.

Vorzugsweise wird bei jedem Behandlungsschritt des Behältnisses ein zusätzlicher Eintrag in der Datenbank erzeugt. Dadurch wäre der gesamte Lebenszyklus des in dem Behältnis verpackten Produkts nachvollziehbar. Dadurch könnte der Kunde beispielsweise vor Produktfälschungen geschützt werden, Überlagerung nachvollziehen oder eine unsachgemäße Lagerung (beispielsweise die Unterbrechung der Kühlkette) nachvollziehen.

Vorzugsweise schließt der Datensatz auch eine Information zum Verkauf an einen Endkunden ein. Diese Information kann für das Recycling von Bedeutung sein, da dies auf eine Nutzung des Produkts, beispielsweise den Verzehr des Produkts durch den Endkunden hinweist und davon ausgegangen werden kann, dass die Verpackung geleert wurde. Wird beim Recycling eine Verpackung detektiert, die nie an einen Endkunden verkauft wurde, kann von einer Vernichtung des Produkts beispielsweise aufgrund der Überlagerung oder unsachgemäßer Lagerung ausgegangen werden, wobei das Behältnis üblicherweise nicht entleert wurde und daher ohne eine entsprechende Vorbehandlung nicht sortenrein recycelt werden kann.

Wird beispielsweise in dem oben genannten Schritt der Code des Behältnisses beispielsweise durch den Hersteller auch mit einem im Behältnis enthaltenen Produkt verknüpft, kann auch das in dem Behältnis enthaltene Produkt eindeutig identifiziert werden. Dies ermöglicht beispielsweise die Echtheit des enthaltenen Produkts und/oder dessen Verpackungsdatum (und ein sich daraus eventuell ergebendes Mindesthaltbarkeitsdatum) nachzuvollziehen.

Gemäß einer bevorzugten Ausführungsform umfasst das Verfahren den weiteren Schritt des Ermittelns eines geeigneten Recyclingverfahrens für das Behältnis auf Basis des in der Datenbank gespeicherten Eintrages.

Nach dem Auslesen des behältnisinhärenten Codes erfolgt erfindungsgemäß eine Abfrage der mit diesem Behältnis verbundenen Daten aus der Datenbank. Da in dieser Datenbank nicht nur die zu dessen Herstellung verwendeten Materialien, sondern vorzugsweise auch Informationen zu einzelnen Stationen und Behandlungen des Behältnisses abgelegt sind, kann ein entsprechender Recyclingprozess durchgeführt werden. Somit wird ermöglicht, sortenreine Rezyklate zu erhalten.

Als besonders vorteilhaft hat sich eine Ausführungsform gezeigt, bei der jedes Behältnis den diesem Behältnis zugeordneten Code in mehrfacher Kopie enthält. Dadurch ist es möglich, dass nicht das gesamte Behältnis vorliegen muss, um ein geeignetes Recycling für vorliegenden Teil des Behältnisses auszuwählen. Wird beispielsweise beim Öffnen der Verpackung das Behältnis zerschnitten, aufgerissen oder andersartig in mehrere Teile geteilt ist dennoch ein für jeden den Code enthaltenden Teil das für diesen Teil geeignete Recycling möglich. Ebenfalls ist dies vorteilhaft, wenn bei der Abfallentsorgung, beispielsweise dem Pressen und/oder Schreddern der Abfall und somit auch ein mit einem Code versehenes Behältnis in Teile zerteilt wird. Auch in diesem Fall kann dennoch das geeignete Recycling für jeden den Code enthaltenden Teil ausgewählt werden.

Die Aufgabe wird weiterhin gelöst durch ein System gemäß Anspruch 8. Das System kann dabei mit allen bereits obig im Rahmen des Verfahrens beschriebenen Merkmalen einzeln oder in Kombination miteinander ausgestattet sein und umgekehrt.

Erfindungsgemäß umfasst das System zum Identifizieren eines Verpackungsmaterials für das Recycling eine Verbindungseinrichtung zum Verbinden eines Behältnisses zur Verpackung eines Produktes mit einem behältnisinhärenten Code, eine Datenbank zur Speicherung eines dem behältnisinhärenten Code zugeordneten Eintrags, wobei der Eintrag zumindest Daten über bei der Produktion des Behältnisses verwendeten Verpackungsmaterialien enthält, wobei die Datenbank verbunden ist mit mindestens einer Empfangseinrichtung zum Empfangen von Daten des Eintrags und von Anfragen der Daten des Eintrags, und mit mindestens einer Sendeeinrichtung zur Beantwortung der Anfrage, und eine Ausleseeinrichtung, die dazu vorgesehen und ausgebildet ist, den behältnisinhärenten Code auszulesen und die Daten des dem behältnisinhärenten Code zugeordneten Eintrags abzurufen.

Insbesondere handelt es sich um ein System zur Verfolgung einer Verpackung von dessen Produktion bis zur Entsorgung. Ein solches System umfasst eine Einrichtung zur Verbindung eines Codes mit einem Behältnis. Diese Verbindungseinrichtung ist vorzugsweise bereits produktionsseitig vorgesehen, so dass dem jeweiligen Behältnis bereits während dessen Produktion ein Code zugewiesen wird. Dieser Code ist vorzugsweise nicht (zerstörungsfrei) lösbar mit dem Behältnis verbunden.

Die Verbindungseinrichtung umfasst vorzugsweise eine Druckeinrichtung, eine Umformungseinrichtung und/oder eine Lasereinrichtung. Wie oben verfahrensseitig beschrieben ist, kann durch einen Druck oder eine Laserbeaufschlagung der Code auf das Behältnis aufgebracht oder in das Behältnis eingebracht werden. Ebenfalls wäre es denkbar, dass das Behältnis zumindest abschnittsweise um ein den Code enthaltendes Element herum geformt wird. Dies ist insbesondere bei transparenten Materialien denkbar.

Das System umfasst weiterhin eine Speichereinrichtung für eine Datenbank. Diese Speichereinrichtung ist vorzugsweise mit mindestens einer Sendeeinrichtung und mindestens einer Empfangseinrichtung verbunden. Durch die Empfangseinrichtung können Daten empfangen werden, die mit einem bestimmten Code verknüpft sind. Ebenso ermöglicht die Empfangseinrichtung die Annahme von Anfragen zu einem Code. Eine solche Anfrage kann durch eine Sendeeinrichtung beantwortet werden.

Vorzugsweise wird in dieser Datenbank bereits durch den Hersteller des Behältnisses ein Eintrag abgelegt, der für ein bestimmtes Behältnis und/oder einen bestimmten Code charakteristisch ist.

Weiterhin umfasst das System mindestens eine Ausleseeinrichtung zum Auslesen des behältnisinhärenten Codes. Eine derartige Ausleseeinrichtung ist vorgesehen, um den für dieses Behältnis geeigneten Recyclingprozess zu wählen.

Gemäß einer bevorzugten Ausführungsform ist die Ausleseeinrichtung in einem Mobiltelefon integrierbar, wobei die Ausleseeinrichtung in Form einer App des Mobiltelefons aufrufbar ist.

Eine weitere Ausleseeinrichtung kann bevorzugt bei einem Endverbraucher, beispielsweise in Form eine App, vorzugsweise auf einem Mobiltelefon, angeordnet sein. Damit wird dem Endverbraucher ermöglicht in der Datenbank hinterlegte Informationen zu dem in einem bestimmten Behältnis enthaltenen Produkt abzufragen.

Eine weitere Ausleseeinrichtung kann bevorzugt bei einem Logistikdienstleister, wie beispielsweise einem Transportunternehmen oder einem Lager, einem Großhändler und/oder einem Einzelhändler vorgesehen sein. Dadurch wird auch diesen ermöglicht, den Code der Verpackung zu scannen und dem diesem Code in der Datenbank zugeordnetem Eintrag zusätzliche Informationen hinzuzufügen, die für das in dem Behältnis enthaltene Produkt und/oder die Verpackung während der Verweildauer bei diesem Unternehmen charakteristisch sind.

Gemäß einer bevorzugten Ausführungsform ist die Datenbank mit dem Internet verbunden. Bevorzugt ist die Datenbank über das Internet zumindest zur Abfrage zugänglich, um sowohl Unternehmen, die ein mit einem wie oben beschriebenen Code versehenes Behältnis zum Verpacken von Produkten verwenden oder die ein in einem solchen Behältnis verpacktes Produkt weiter behandeln (beispielsweise transportieren, lagern, oder verkaufen), als auch Privatpersonen und/oder Endverbrauchern den Zugang zu dieser Datenbank zu ermöglichen. Dadurch wird es diesem Personenkreis möglich, eine Verpackung zu identifizieren und damit auch die in dieser Datenbank hinterlegten Informationen zum enthaltenen Produkt abzufragen.

Insbesondere ist bevorzugt, dass die Datenbank eine cloudbasierte Datenbank ist.

Vorzugsweise umfasst der Schritt des Herstellens des Behältnisses einen Tiefziehvorgang.

Vorzugsweise umfasst das Behältnis ein Material, das ausgewählt ist aus einer Gruppe, die PP, PE PUR, PS, PU, HDPE, PA, Papier, Pappe und andere umfasst. Insbesondere ist bevorzugt, dass das Behältnis ein einziges Material dieser Gruppe umfasst. Ist vorgesehen, dass das Behältnis mehrere Materialien dieser Gruppe umfasst, ist bevorzugt, dass jeder Behältnisabschnitt der aus einem anderen Material besteht einen eigenen Code erhält, der sich vom Code eines anderen Abschnitts unterscheidet. Durch diese letztgenannte Möglichkeit können nach der Zerkleinerung und der Zerlegung eines Behältnisses in Bruchstücke die Materialien der einzelnen Bruchstücke anhand des Codes identifiziert werden und entsprechend dem enthaltenen Material recycelt werden.

Insbesondere ist bevorzugt, dass der Code dem Behältnis durch Ablatieren, beziehungsweise Schmelzen oder Eingravieren kleinster Codemuster in die Oberfläche der Innenflächen einer Werkzeugform zur Herstellung des Behältnisses zugewiesen wird.

Vorzugsweise ist der diesem Behältnis zugeordnete Code in identischer Form mehrfach auf Wand- und Bodenseiten des Behältnisses oder eines zugehörigen Bestandteils aufgebracht.

Weitere Ziele, Vorteile und Zweckmäßigkeiten der vorliegenden Erfindung sind anhand an-liegender Zeichnungen und nachfolgender Beschreibung erläutert. Hierbei zeigen:

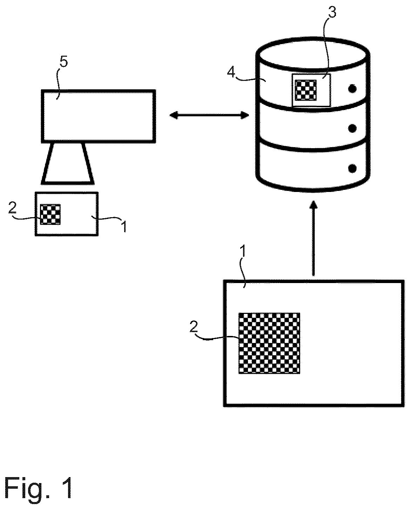

- Fig. 1: schematisch ein System zum Identifizieren eines Verpackungsmaterials für das Recycling gemäß einer bevorzugten Ausführungsform.

Für das Verfahren, das von einem in Fig. 1 schematisch ausführbaren System ausführbar ist, wird zunächst ein Behältnis 1 zur Verpackung eines Produktes mit einem behältnisinhärenten Code 2 bereitgestellt. Das Muster des Codes 2 ist lediglich schematisch dargestellt. In einem nächsten Schritt ein dem behältnisinhärenten Code 2 zugeordneten Eintrag 3 in einer Datenbank 4 angelegt, wobei der Eintrag 3 zumindest Daten über bei der Produktion des Behältnisses verwendeten Verpackungsmaterialien enthält. Weiterhin wird eine Ausleseeinrichtung 5 zum Auslesen des behältnisinhärenten Codes 2, das sich an dem Behältnis befindet, bereitgestellt. Mittels der Ausleseeinrichtung 5 wird in einem nächsten Schritt der behältnisinhärente Code 2 ausgelesen. Unter Verwendung des ausgelesen Codes 2 werden Daten des Eintrags 3 aus der Datenbank 4 für das Recycling des Behältnisses 1 abgefragt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Behältnis
- 2: behältnisinhärenter Code
- 3: Eintrag in einer Datenbank
- 4: Datenbank
- 5: Ausleseeinrichtung

## Patentansprüche

1. Verfahren zum Identifizieren eines Verpackungsmaterials für das Recycling, umfassend die Schritte:
a. Bereitstellen eines Behältnisses (1) zur Verpackung eines Produktes mit einem behältnisinhärenten Code (2);
b. Anlegen eines dem behältnisinhärenten Code (2) zugeordneten Eintrags (3) in einer Datenbank (4), wobei der Eintrag (3) zumindest Daten über bei der Produktion des Behältnisses verwendeten Verpackungsmaterialien enthält;
c. Bereitstellen zumindest einer Ausleseeinrichtung (5) zum Auslesen des behältnisinhärenten Codes (2);
d. Auslesen des behältnisinhärenten Codes (2);
e. Abfragen der Daten des Eintrags (3) aus der Datenbank (4) für das Recycling des Behältnisses (1).

2. Verfahren nach Anspruch 1,
**dadurch gekennzeichnet, dass**
eine Vielzahl an Behältnissen bereitgestellt wird, wobei aus der Vielzahl an Behältnissen jeweils ein einzelnes Behältnis (1) mit einem einmaligen behältnisinhärenten Code (2) versehen ist oder jeweils eine bestimmte Art oder jeweils eine bestimmte Charge an Behältnissen mit einem separaten behältnisinhärenten Code (2) versehen ist.

3. Verfahren nach Anspruch 2,
**dadurch gekennzeichnet, dass**
ein behältnisinhärenter Code (2) während eines Lebenszyklus des Behältnisses (1) einmalig ist, wobei nach Ende des Lebenszyklus der einmalige Code (2) an ein weiteres Behältnis zu Beginn eines Lebenszyklus des weiteren Behältnisses vergebbar ist.

4. Verfahren nach Anspruch 3,
d**adurch gekennzeichnet,** dass
der Eintrag (3) in der Datenbank (4) für das mit dem Code (2) versehene Behältnis (1) während des Lebenszyklus des Behältnisses (1) an jedem Ort und von einer Person mit der Ausleseeinrichtung (5) oder einer Vorrichtung mit der Ausleseeinrichtung (5), die das Behältnis (1) behandelt, abfragbar ist.

5. Verfahren nach einem der vorhergehenden Ansprüche,
**dadurch gekennzeichnet, dass**
der Eintrag (3) in der Datenbank (4) für das mit dem Code (2) versehene Behältnis (1) weitere Daten enthält, wobei die weiteren Daten ausgewählt sind aus einer Gruppe, die für ein Volumen des Behältnisses, eine Form des Behältnisses, eine Kompatibilität des Behältnisses zu einem Behältnisverschluss, eine Kompatibilität zu Hilfsstoffen, eine Eignung des Behältnisses zum Verpacken bestimmter Güter, eine Eignung des Behältnisses bei bestimmten Umgebungsbedingungen, ein Zeitintervall, innerhalb dessen das Behältnis zur Verpackung eines Produkts verwendet werden kann, ein Zeitintervall, über welches die Sterilität des Behältnisses gewährleitet werden kann, charakteristisch sind.

6. Verfahren nach einem der vorhergehenden Ansprüche,
**dadurch gekennzeichnet, dass**
das Verfahren den weiteren Schritt umfasst:
Ergänzung und/oder Änderung des Eintrags (3) in der Datenbank (4) bei jeweils einem Behandlungsschritt des Behältnisses (1) durch mindestens eine weitere Information, wobei diese Information ausgewählt ist aus einer Gruppe, die ein im Behältnis enthaltenes Produkt, ein Produktionsdatum des Produkts, ein Produktionsdatum des Behältnisses, ein Verpackungsdatum, ein Verfallsdatum des Produkts, einen Hinweis auf einen verantwortlichen Mitarbeiter, einen Ort der Produktion des Behältnisses und/oder des Produkts, einen Verpackungsort, eine Produktionszeit, eine Verpackungszeit, einen Vertriebsweg, einen Abschnitt eines Vertriebswegs, einen Transporteur, einen Zwischenhändler, einen Großhändler, einen Einzelhändler, einen Verkauf an einen Endverbraucher, einen Gefahrenhinweis, eine Sicherheitsanweisung, eine Lageranweisung, eine Lagertemperatur umfasst.

7. Verfahren nach einem der vorhergehenden Ansprüche,
**dadurch gekennzeichnet, dass**
das Verfahren den weiteren Schritt umfasst:
Ermitteln eines geeigneten Recyclingverfahrens für das Behältnis (1) auf Basis des in der Datenbank (4) gespeicherten Eintrages (3).

8. System zum Identifizieren eines Verpackungsmaterials für das Recycling, umfassend
eine Verbindungseinrichtung zum Verbinden eines Behältnisses (1) zur Verpackung eines Produktes mit einem behältnisinhärentem Code (2),
eine Datenbank (4) zur Speicherung eines dem behältnisinhärentem Code (2) zugeordneten Eintrags (3), wobei der Eintrag (3) zumindest Daten über bei der Produktion des Behältnisses (1) verwendeten Verpackungsmaterialien enthält, wobei die Datenbank (4) verbunden ist
mit mindestens einer Empfangseinrichtung zum Empfangen von Daten des Eintrags (3) und von Anfragen der Daten des Eintrags (3), und
mit mindestens einer Sendeeinrichtung zur Beantwortung der Anfrage,
und eine Ausleseeinrichtung, die dazu vorgesehen und ausgebildet ist, den behältnisinhärenten Code (2) auszulesen und die Daten des dem behältnisinhärentem Code (2) zugeordneten Eintrags (3) abzurufen.

9. System nach Anspruch 8,
**dadurch gekennzeichnet, dass**
die Ausleseeinrichtung (5) in einem Mobiltelefon integrierbar ist, wobei die Ausleseeinrichtung (5) in Form einer App des Mobiltelefons aufrufbar ist.

10. System nach Anspruch 8 oder 9,
**dadurch gekennzeichnet, dass**
die Datenbank (4) mit dem Internet verbunden ist, wobei die Datenbank (4) eine cloudbasierte Datenbank ist.
